# EUROPÄISCHE PATENTSCHRIFT

(11) **EP 3 206 047 B1**
(45) Veröffentlichungstag und Bekanntmachung des Hinweises auf die Patenterteilung: **31.07.2019**
(21) Anmeldenummer: 17155999.0
(22) Anmeldetag: 14.02.2017
(51) Int. Cl.: G01S 17/42, G01S 17/89, G01S 7/481

(54) **LASERSCANNER**
LASER SCANNER
SCANNER LASER

(30) Priorität: 15.02.2016 DE 102016102610
(43) Veröffentlichungstag der Anmeldung: 16.08.2017
(73) Patentinhaber: Zoller & Fröhlich GmbH, 88239 Wangen im Allgäu (DE)
(72) Erfinder: FRÖHLICH, Christoph, Dr., 88239 Wangen (DE); METTENLEITER, Markus, 88316 Isny (DE)
(74) Vertreter: Winter, Brandl, Fürniss, Hübner, Röss, Kaiser, Polte - Partnerschaft mbB

(56) Entgegenhaltungen:
- EP-A1- 1 624 595
- US-A1- 2015 043 009

## Beschreibung

Die Erfindung betrifft einen Laserscanner gemäß dem Oberbegriff des Patentanspruchs 1, insbesondere zum Erfassen von räumlichen Daten.

Für die terrestrische Erfassung von 3D-Geoinformationen, z.B. für die Erstellung von 3D-Stadtmodellen, wird seit ca. 10 Jahren das sogenannte terrestrische Laserscanning (TLS) verwendet, das im Gegensatz zu photometrischen Systemen aktiv arbeitet und daher nicht von den Lichtverhältnissen sowie dem vorliegenden Objektkontrast abhängig ist. Laserscanner erfassen flächenhaft sogenannte Punktwolken, welche 3D-Koordinaten abgetasteter Objektoberflächen sowie deren radiometrische Eigenschaften in der Wellenlänge der verwendeten Laserquelle beinhalten. Diese radiometrischen Informationen (Intensitäten) beschreiben folglich das jeweilige lokale Reflexionsverhalten einer Objektoberfläche.

Neben der rein geometrischen Erfassung des Objektraums ist es vielfach erforderlich, zusätzliche Informationen über die erfassten Objekte, wie etwa deren bauliche oder energetische Eigenschaften, zu erhalten. In diesem Zusammenhang sind besonders Materialeigenschaften von Interesse, zu deren Unterscheidung sich sogenannte spektrale Signaturen eignen, die in Abhängigkeit von der eingesetzten Wellenlänge unterschiedliche Reflexionsgrade aufweisen und beispielsweise durch multispektrale Photographien erfasst werden können. Dadurch können neben der Beurteilung geometrischer Veränderungen im baulichen Zustand von Bauwerken, von Altgebäudesubstanz oder Brücken beispielsweise auch Aussagen über möglicherweise vorliegende Vegetationsspuren (unterschiedlicher Feuchte- und Chlorophyllgehalt) getroffen und generell Materialien unterschieden werden.

Ein grundlegendes Problem bei der getrennten Erfassung von geometrischen (TLS) und radiometrischen Daten (multispektrale Photographien) durch verschiedene Sensoren ist dabei die notwendige Zusammenführung der Daten. Als Nachteil stellt sich dabei die unterschiedliche räumliche und zeitliche Auflösung der genannten Sensoren
dar. Letztere ist im Übrigen sogar konträr zu einander: Kameras erfassen alle Informationen (Pixel) simultan während Laserscanner 3D-Punkte im Objektraum sequentiell abtasten, weshalb ein zeitlicher Versatz zwischen den einzelnen Messungen vorliegt. Die nachträgliche Fusion auf Datenebene ist dabei per se mit Nachteilen behaftet: Die räumlich und zeitlich unterschiedliche Auflösung während der Datenerfassung kann rechnerisch nicht vollständig beseitigt werden.

Ein weiteres grundlegendes Problem ist das rein passive Aufnahmeverfahren herkömmlicher, auf größere Distanzen arbeitender Spektralkameras. Damit hängen die erzielten Resultate von der Umgebungsbeleuchtung (Tageslicht) ab, die sich jedoch je nach Jahreszeit, Tageszeit und Wetterbedingung deutlich ändern kann.

EP 1 624 595 A1 offenbart ein Verfahren zum Übertragen von optischen Signalen unterschiedlicher Modulationsformate in verschiedenen Bändern. Die optischen Signale innerhalb jedes Bandes können durch einen vorbestimmten Kanalabstand getrennt sein, und die verschiedenen Bänder können durch einen vorbestimmten Bandtrennabstand getrennt sein. Der Bandtrennabstand kann etwa doppelt so groß sein wie der vorbestimmte Kanalabstand.

In den Druckschriften DE 10 2009 015 920 B4 und EP 2 097 715 B1 sind Laserscanner gezeigt, bei denen zur Erfassung farblicher Informationen drei Laserdioden (RGB) verwendet werden, deren Laserstrahlen über ein 3D-Strahlablenksystem auf das zu vermessende Objekt gerichtet werden. Die vom Objekt reflektierten Messstrahlen werden über Fotodioden ausgewertet. Zumindest einer der Laserstrahlen ist moduliert, so dass aus der gemessenen Phasenverschiebung eine Distanz zum Objekt ermittelt werden kann und dessen 3D-Vermessung möglich ist.

In der US 2015/0043009 A1 ist ein ähnliches System beschrieben, bei dem drei Farbkanäle (RGB) mit jeweils einer Laserdiode und eine zusätzliche im Infrarotbereich abstrahlende Laserdiode zur 3D-Vermessung verwendet werden. Die Messstrahlen werden dabei über einen gemeinsamen optischen Strahlengang auf das zu vermessende Objekt gerichtet. Die vom Objekt reflektierten Messstrahlen werden über jeweils ähnlich aufgebaute optoelektronische Messkanäle (für jede Farbe ein Messkanal) jeweils bestehend aus einer Fotodiode (APD und selektiver Farbfilter), einem Vorverstärker (Transimpedanzverstärker TIA), einem Bandpassfilter (passend zur jeweiligen Modulationsfrequenz), einem Treiber-Verstärker und einem A/D-Wandler einem allen Messkanälen gemeinsamen Auswerteprozessor zugeführt.

Diese Konfiguration birgt jedoch entscheidende Nachteile in sich:
Alle Kanäle weisen, bedingt durch Bauteile-Toleranzen und Temperatur-abhängige Änderungen, leicht unterschiedliche Verstärkungen und Laufzeiten auf. Dies verursacht zeitlich und temperaturabhängig veränderliche Farbfehler, was die Güte der Farberfassung beeinträchtigt.

Besonders kritisch sind hier die Bandpass-Filter, besonders dann, wenn sie auf unterschiedliche Modulations-Frequenzen der verschiedenen Kanäle abgestimmt sind. Dies führt fast zwangsläufig zu unterschiedlichen Laufzeiten, die nur mit hohem Aufwand einigermaßen anzugleichen sind.

Selbst wenn die drei (oder mehr) Kanäle nicht zur Phasen (= Distanz) Messung verwendet werden, sondern nur für die Intensität, verursachen selbst leicht unterschiedliche Laufzeiten in den einzelnen Kanälen bei schnellen Farbübergängen Farbfehler, da sich ja nicht alle Kanäle gleichzeitig ändern können. Sind bei einer einfachen Erfassung von RGB Farbwerten leichte Farbfehler vielleicht noch tolerierbar, so erfordert die Auswertung multispektraler Signaturen hochgenaue und stabile Messungen der relativen Intensitäten der Messkanäle zueinander, so dass die oben erwähnten Fehler nicht mehr hinnehmbar sind.

Der drei- (oder mehr-)fache elektronische Aufbau benötigt außerdem einen gewissen Platz, was bei immer kleineren Realisierungen heutiger Geräte problematisch sein kann.

Es erscheint zunächst naheliegend, durch Abbildung aller Wellenlängen auf nur eine Fotodiode (APD), spätestens nach den TIAs alle Signale zusammen zu führen, weisen sie doch unterschiedliche Modulations-Frequenzen auf, anhand derer sie im Auswerteprozessor durch entsprechende Signalverarbeitung wieder getrennt werden können.

Tatsächlich ergäbe sich jedoch als wesentlicher Nachteil eine Vervielfachung des Messrauschens, da bei einfacher Überlagerung aller Kanäle sich das (sehr breitbandige) Messrauschen aller Kanäle aufsummieren würde, was zu einer dramatischen Verschlechterung des Signal-Rausch Abstandes (SNR) führen würde, besonders bei den mehr als nur 3 Kanälen einer multispektralen Anwendung.

Aus diesem Grund sind bei den vorbeschriebenen bekannten Lösungen die Messkanäle getrennt voneinander gehalten.

Demgegenüber liegt der Erfindung die Aufgabe zugrunde, einen Laserscanner zu schaffen, mit dem die aufgezeigten Nachteile beseitigt sind.

Diese Aufgabe wird durch einen Laserscanner mit den Merkmalen des Patentanspruchs 1 gelöst.

Vorteilhafte Weiterbildungen der Erfindung sind Gegenstand der Unteransprüche. Der erfindungsgemäße Laserscanner hat zum einen Sensoren zur Erfassung von räumlichen Daten - insofern unterscheidet er sich nicht von herkömmlichen 3D-Laserscannern. Zusätzlich sind Sensoren zur Erfassung von radiometrischen Daten/Intensitäten, d.h. weitere Spektralkanäle vorgesehen. Der Sensor zur Erfassung der radiometrischen Daten weist mehrere Laserdioden verschiedener Wellenlängen auf, deren Laserstrahlen über ein 3D-Strahlablenksystem auf das zu vermessende Objekt gerichtet werden. Die vom Objekt reflektierten Strahlen werden über optische Elemente in einzelne Wellenlängen aufgeteilt und über optoelektronische Messkanäle mit Fotodioden, elektronischer Signalaufbereitung und einer zugeordneten Auswerteeinheit verarbeitet. Erfindungsgemäß ist ein Combiner vorgesehen, über den zumindest alle radiometrischen Messkanäle abschnittsweise und selektiv zu einem Signalpfad addiert sind, wobei diesem Signalpfad jeweils ein gemeinsamer Verstärker, A/D-Wandler und Auswerteprozessor zugeordnet ist. Es kann auch vorteilhaft sein, entweder den zusätzlichen Kanal zur Distanzmessung in diesen Signalpfad zu integrieren oder die Distanzmessung ohne zusätzlichen Kanal nur aus den Phasenauswertungen der radiometrischen Kanäle zu gewinnen. Ferner ist der Auswerteprozessor ausgelegt, um Phasenlagen der einzelnen Messfrequenzen zu ermitteln und daraus Driften/ Toleranzen im Combiner zu bestimmen und zu korrigieren.

Vorzugsweise ist der Combiner ausgelegt, um die Messkanäle frequenz-selektiv zu addieren. Dabei werden vorzugsweise nur die Frequenzbereiche ausgeschnitten und addiert, in denen sich die verschiedenen Messsignale befinden, so dass sich auch ein Messrauschen der Einzelkanäle nicht überlagert und somit das SNR des Gesamtsignals nicht verschlechtert wird.

Durch eine derartige Frequenz-Selektivität können auch die zahlreichen bei den bisherigen Lösungen erforderlichen Bandpass-Filter eingespart werden.

Die Auswertung der Phasenlagen kann auch dazu benutzt werden, die Objektdistanz zu bestimmen, so dass auf einen zusätzlichen Kanal zur Distanzmessung verzichtet werden kann.

Dabei können dem Combiner Bauteile mit veränderlicher Kapazität, beispielsweise Variocap-Dioden zugeordnet sein, die zur Kompensation der oben genannten Driften/Toleranzen über den gemeinsamen Auswerteprozessor ansteuerbar sind.

Bei einem besonders bevorzugten Ausführungsbeispiel der Erfindung sind in dem addierten Signalpfad zumindest ein Verstärker und ein A/D-Wandler vorgesehen.

Gemäß einer vorteilhaften Weiterbildung der Erfindung haben alle spektralen Sensoren und auch der Distanzmesser einen gemeinsamen optischen Strahlengang innerhalb des Laserscanners.

Es erfolgt dabei eine zeitgleiche Abtastung aller Spektralkanäle. Vorzugsweise werden die gleichen Flächen gleichzeitig radiometrisch und räumlich vermessen, wobei die Objekte aktiv beleuchtet werden, was die Ergebnisse unabhängig vom Umgebungslicht macht.

Die Grundbestandteile eines Laserscanners sind - wie bereits vorstehend ausgeführt - eine Laser- und eine Photodiode mit welcher Laserlicht einer Wellenlänge emittiert und das vom Objekt rückgestreute Licht wieder empfangen wird, sowie ein Ablenksystem zur dreidimensionalen Abtastung des Objektraums. Zur aktiven Erfassung in mehreren Spektralkanälen sollen zusätzliche Laser- und Fotodioden genutzt werden. Dadurch können neben der Beurteilung des baulichen Zustands z.B. durch relative Feuchte- und Chlorophyllgehalt, der Aussagen über möglicherweise vorliegende Vegetationsspuren trifft, auch Materialien unterschieden werden.

Eine Besonderheit des multispektralen Laserscanners kann die Nutzung eines identischen optischen Pfades sein, wodurch Parallaxen vermieden werden, so dass alle Informationsschichten für gleiche Objektbereiche Orts- und Zeit- synchron erfasst werden können. Als Schlüsselproblematik ist in diesem Zusammenhang die Kombination der einzelnen Spektralkanäle zu einem koaxialen Messstrahl zu sehen, für die sich faseroptische Methoden oder etwa dichroitische Spiegel oder Prismen eignen. Zur Bestimmung geeigneter Wellenlängen für die multispektrale Abtastung werden spektrale Signaturen von interessierenden Materialien und Stoffen ermittelt. Basierend auf diesen Daten können diejenigen Wellenlängen ausgesucht werden, die möglichst große spektrale Differenzen zwischen den Kennlinien der untersuchten Materialien bzw. bestimmter Material-Gruppen aufweisen.

Um das System auch auf kinematischen Plattformen wie etwa Autos (Mobile Mapping) nutzen zu können, sollten nach Möglichkeit alle eingesetzten Laserdioden Zeit- und Orts- synchron arbeiten, d.h. zur selben Zeit identische Punkte im Raum vermessen. Auch kann bei der Nutzung des Verfahrens von keinem Anwender verlangt werden, dieselbe Szene mehrmals für verschiedene Spektralkanäle aufnehmen zu müssen. Ein gleichzeitiger Scan in verschiedenen Spektral-Bereichen stellt außerdem einen erheblichen Zeitvorteil dar. Des Weiteren kann die spektrale Information eine automatischen Segmentierung (Unterscheidung verschiedener Objekte) der aufgenommenen Daten in einer Auswerte-Software erheblich beschleunigen und wesentlich zuverlässiger machen. Da die Nutzung des Systems im öffentlichen Raum, etwa zur Erfassung gesamter Innenstädte, angestrebt wird, gilt es, Anforderungen der Augensicherheit bei der Entwicklung zu berücksichtigen. Das bedeutet die Einhaltung der Laserklassen 1, 2 oder 3R (nach BGV-B2 bei sichtbarer Laserstrahlung zulässig für Laser-Vermessungsgeräte im öffentlichen Raum ohne weitere Schutzmaßnahmen).

Folgende Elemente könnten vorteilhafte Ausgestaltungen/Aspekte der Erfindung sein:
- Technisch/Technologische Umsetzung der zu vereinigenden Strahlengänge
- Mechanische Stabilität der einzelnen Strahlengänge - Abweichung der Ausrichtung zueinander
- Trennung des Empfangssignals vom ambienten Licht
- Vermeidung von Instabilitäten der Sendeleistung der Laserdioden - Abweichung von radiometrischen Kalibrierwerten
- Verwendung mehrerer Laserdioden als Sender verschiedener Wellenlängen für die verschiedenen Spektralkanäle, wobei die empfangenen Wellenlängen nach schmalbandiger optischer Filterung entweder durch nur wenige / eine einzige Photodiode(n) erfasst werden können oder durch getrennte Photodioden erfasst werden, deren elektrische Signale aber bereits nach dem Eingangsverstärker (TIA) wieder zusammen geführt werden.
- Unterscheidung der einzelnen Spektralkanäle im Empfangszweig durch deren unterschiedliche Modulations-Frequenzen.
- Verwendung von Modulation / synchroner Demodulation im Sende-/ Empfangs- Zweig der Spektralkanäle für hohe Empfindlichkeit und die Unterdrückung von Einflüssen der Umgebungsbeleuchtung.
- Synchronisation aller Sende- und Empfangskomponenten
- Softwaretechnische Verarbeitung sehr großer Datenmengen (Punktmengen > 30 Mio. 3D-Punkten mit zugehörigen Spektral-Kanälen) auf Standard-PCs
- Datenhandling und Datenfluss der Multispektraldaten mittels geeigneter Datenstrukturen und Dateiformate
- Die gemessenen Intensitätswerte sollen hinreichend korrigiert sein, um die Einflüsse hervorgerufen durch Objektdistanz und Auftreffwinkel zu kompensieren, was sich maßgeblich auf die Datenverarbeitung auswirkt
- Punktwolkensegmentierung unter vollständiger Ausnutzung aller zur Verfügung stehenden geometrischen und radiometrischen Informationen

Auf Grundlage des Multisensorsystems werden im TLS-Segment neue Anwendungsszenarien und Auswertemöglichkeiten eröffnet, wie beispielsweise:
- Unterscheidung / Separierung von verschiedenen Materialien (z.B. Teer, Stein, Holz, Kunststoff),
- Automatisches Entfernen von Vegetation/Bewuchs wie etwa Bäumen, Hecken und Sträuchern aus 3D-Punktwolken von urbanen Szenen zur Vorbereitung der Gebäudemodellierung.
- Detektion von Feuchtigkeit und biologischem Bewuchs (Moose, Flechten, etc.) an Bauwerken,
- Weitere deutliche Verbesserung der Datenbasis für die Generierung fotorealistischer bzw. zweckgebunden strukturierter Gebäudemodelle.
- Klassifizierung von Gestein im Bergbau, z.B. zur Verfolgung von Rohstoff-Adern unter Tage.
- Klassifizierung von trennbaren Materialien in abzureißenden Anlagen, Gebäuden oder auf Deponien.
- Unterscheidung verschiedener Spuren in der Forensik (Körperflüssigkeiten, Materialien, gefährliche Stoffe).
- Einfachere und schnellere Segmentierung von 3D Punktewolken anhand der vorkommenden Oberflächen, Pflanzen, Straßen, Gebäude, Personen, Brücken, etc..

Die erfindungsgemäße Sensorik ermöglicht weiterhin erstmals eine integrierte Datenerfassung zur Beantwortung aktueller wissenschaftlicher Fragestellungen aus den Bereichen "Stadtsystemmodellierung" bzw. "Strukturmodellierung von Bauwerken".

Folgende Elemente können auch vorteilhafte Weiterbildungen sein:
- Simulation und Vergleich eines gemeinsamen optischen Strahlengangs nach verschiedenen Verfahren, da es für die erforderliche spektrale Breite keine Standardlösungen am Markt gibt.
- Analyse zur Aufteilung des reflektierten Laserlichts in die einzeln emittierten Wellenlängen, wobei eine hohe Empfindlichkeit und die schmalbandige optische Filterung der einzelnen Kanäle wesentlich sind, und somit eine Messung bis auf mindestens 50m Distanz erlaubt.
- Erzielen einer extrem kompakten Bauweise, die nach Möglichkeit in einem modifizierten Standard Laserscanner untergebracht werden kann, zumindest aber als Gesamtgerät tragbar (<15Kg) und Batterie betrieben gehalten sein muss.

- Modularer Aufbau der Multispektral-Einheit, so dass diese möglichst einfach auf andere Spektralkanäle umgerüstet werden kann, ohne dass eine Umkonstruktion erforderlich wird.
- Softwaretechnische Umsetzung eines Algorithmus zur Unterscheidung von Objekten oder Bauteilen an Gebäuden unter Ausnutzung des radiometrischen Segmentierungsergebnisses (aus externer Software). Es wird vorzugsweise eine sogenannte Segmentierungsgenauigkeit bzw. Klassifizierungsgüte von etwa 80% erreicht. Dies bedeutet, dass in einem bekannten Referenzszenario 80% aller erfassten Flächen segmentiert und schließlich korrekt klassifiziert wurden.
- Nutzung von effizienten Datenstrukturen, Datenfluss und Algorithmen zum Handling sehr großer 3D-Datenmengen (Punktwolken > 30 Mio. Punkten) auf Standard-PCs
- Nutzung eines Verfahrens zur radiometrischen und geometrischen Kalibrierung des Multisensorsystems
- Auswertung der ausgesandten und empfangenen Signale und Ableitung von multispektralen Intensitäten bzw. Intensitätsunterschieden, die für die spektrale Klassifizierung erforderlich sind. Es gilt dabei eine Aufschlüsselung der einzelnen Kanäle mit einer Messgenauigkeit von 3% oder besser zu erreichen,
- Verwendung eines Austauschformates zwischen 3D-Auswertesoftware und etablierten radiometrisch basierten Segmentierungsalgorithmen aus dem Bereich der Fernerkundung,
- radiometrische und geometrische Kalibrierung des Multisensorsystems.

Der erfindungsgemäße Ansatz beinhaltet (beliebig viele) spektrale Kanäle und weist auf die Möglichkeit hin, die gescannte Szene anhand spektraler Unterschiede zu segmentieren. Das würde die automatische Erkennung von zusammen gehörenden Flächen oder Objekten erheblich erleichtern.

Der neue Ansatz benötigt beispielsweise für drei oder mehr spektrale Kanäle im Wesentlichen nur einen gemeinsamen Signalpfad, zu dem alle Messkanäle nach den Vorverstärkern (TIAs) der Photodioden (APDs) über einen sogenannten frequenzselektiven Combiner zusammen geführt werden. Das minimiert nicht nur den Bauteileaufwand, sondern hat den großen Vorteil, dass Unterschiede in der Signalübertragung (z.B. durch Bauteile Toleranzen oder thermische Drift) minimiert werden, da alle Messsignale identischen Variationen unterworfen sind.

Die im frequenz-selektiven Combiner auftretenden Variationen lassen sich dort in einfacher Weise über veränderliche Kapazitäten (z.B. Varaktoren) kompensieren, die vom Auswerteprozessor angesteuert werden oder - falls sie nicht zu groß sind - sogar ohne Rückführung rein rechnerisch nur im Auswerte-Prozessor.

Damit entfallen auch die einzelnen, in bisherigen Schriften beschriebenen, Bandpassfilter, deren Driften sich - wenn überhaupt, dann nur mit großem Aufwand - kompensieren ließen.

Bevorzugte Ausführungsbeispiele der Erfindung werden im Folgenden anhand schematischer Zeichnungen näher erläutert. Es zeigen:
Fig. 1 eine schematische Darstellung des Strahlengangs und der Signal- Aufbereitung/-Verarbeitung eines erfindungsgemäßen Laserscanners und
Fig. 2 Messkanäle des Laserscanners gemäß Fig. 1.

Der Grundaufbau von 3D-Laserscannern ist aus dem eingangs genannten Stand der Technik und beispielsweise auch aus der DE 10 2012 105 027 A1 der Anmelderin bekannt, so dass in der Folge lediglich die für das Verständnis der Erfindung wesentlichen Bauelemente erläutert werden und im Übrigen auf die DE 10 2012 105 027 A1 verwiesen wird, deren Inhalt zur Offenbarung der vorliegenden Anmeldung zählen soll.

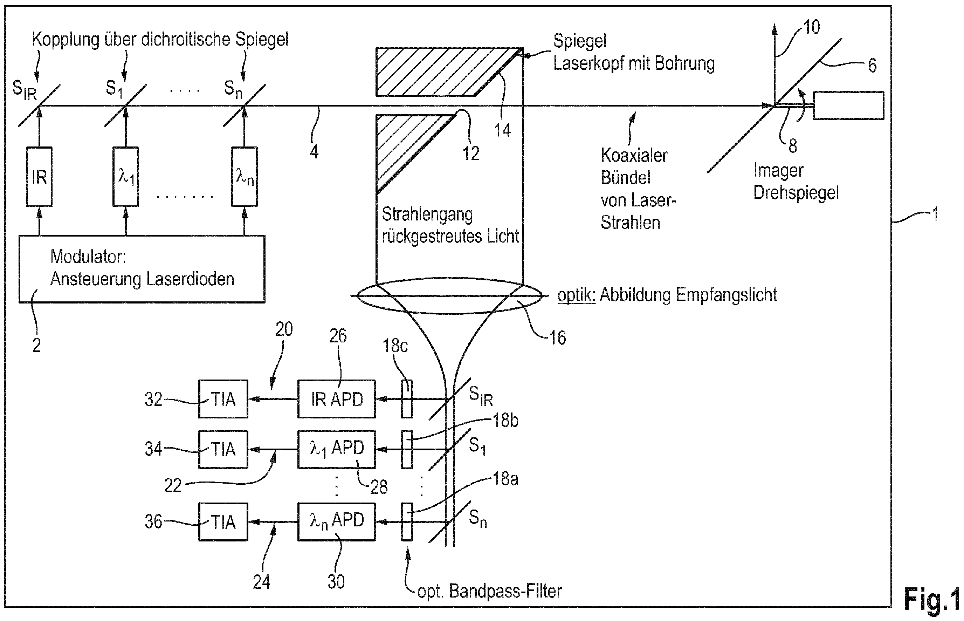

Dementsprechend hat der Laserscanner 1 einen Messkopf, in dem eine Vielzahl von Laserdioden angeordnet sind, die in der Darstellung gemäß Fig. 1 mit IR, λ₁... λₙ gekennzeichnet sind und die der radiometrischen Vermessung des Objektes dienen. Die mit IR gekennzeichnete Laserdiode gibt Licht im Infrarotbereich ab. Derartige Laserdioden werden üblicherweise zur geometrischen Vermessung des Objekts verwendet. Dabei ist der Laserscanner nicht wie der vorbeschriebene Stand der Technik auf Wellenlängen im roten, grünen und blauen Bereich beschränkt, sondern die Laserdioden zur Erfassung radiometrischer Daten (Intensitäten) können so ausgelegt sein , dass eine wesentlich weitergehende spektrale Signatur, beispielsweise vom Infraroten bis ins Ultraviolette erfasst werden kann. Dies kann zur Unterscheidung verschiedener Stoffe und/oder zur automatischen Klassifizierung zusammengehöriger Objekte innerhalb der aufgenommenen Laserdaten führen. Dabei können selbstverständlich auch wesentlich mehr als drei Laserdioden verwendet werden.

Die Ansteuerung der Laserdioden IR, λ₁... λₙ erfolgt über eine Modulatoreinheit 2. Die von den Laserdioden abgegebenen Laserstrahlen werden beispielsweise über dichroitische Spiegel S oder auch andere optische Elemente, wie etwa ein System von Prismen, koaxial ausgerichtet bzw. kombiniert, gelangen als koaxiales Bündel von Laserstrahlen 4 durch eine Bohrung 12 eines Spiegels 14 im Laserkopf und treffen auf einen rotierenden, schräg angestellten Drehspiegel 6 auf, der das koaxiale Bündel von Laserstrahlen 4 auf das zu vermessende Objekt richtet, wobei die Laserstrahlen durch ein nicht dargestelltes Austrittsfenster aus dem Messkopf austreten. Beim dargestellten Ausführungsbeispiel rotiert der Drehspiegel um eine horizontale Rotationsachse 8. Der gesamte Messkopf dreht sich um eine Vertikalachse, die in Fig.1 koaxial zum austretenden Laser-Bündel 10 gezeichnet ist.

Die vom zu vermessenden Objekt reflektierten/rückgestreuten Strahlen werden über den Drehspiegel 6 auf den vorgenannten Spiegel 14 umgelenkt, so dass der Strahlengang des rückgestreuten Lichts (Laserstrahlen) über eine Optik 16 in eine Abbildung des Empfangslichts umgewandelt wird. Die von der Optik umgelenkten Strahlen treffen dann wiederum auf optische Elemente zur Aufteilung der einzelnen Wellenlängen, beispielsweise dichroitische Spiegel S_{IR}, S₁... Sₙ und werden anschließend über optische Bandpassfilter 18a, 18b 18c....... schmalbandig gefiltert, so dass möglichst wenig störendes Licht auf die optischen Empfänger (Photodioden/APDs) der einzelnen spektralen Messkanäle 20, 22, 24... gelangt.

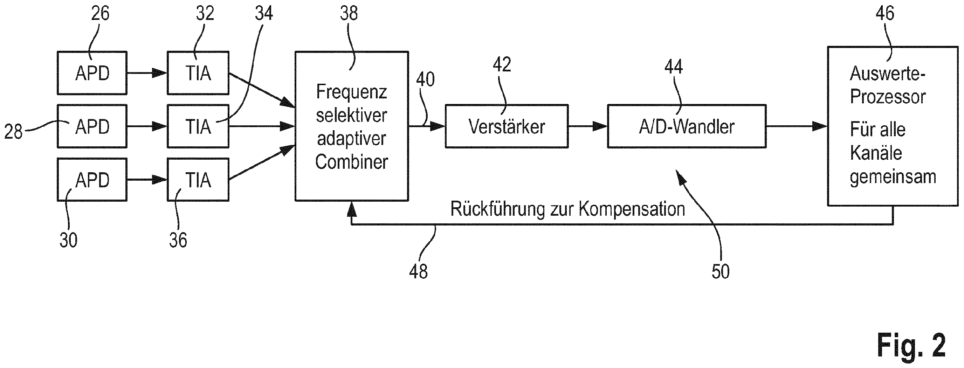

Drei dieser Messkanäle 20, 22, 24 sind in Fig. 2 beispielhaft detaillierter dargestellt. Für ein radiometrisches Messsystem wären allerdings deutlich mehr Kanäle erforderlich.

Demgemäß hat jeder Messkanal 20, 22, 24 eine Fotodiode (Avalanche-Fotodiode, APD) 26, 28, 30, in denen jeweils die Laserstrahlen der über die Bandpassfilter 18a..c separierten Wellenlängen in entsprechende elektrische Signale umgewandelt werden. Diese elektrischen Signale werden dann jeweils einem Transimpedanzverstärker (TIA) 32, 34, 36 zugeführt und die verstärkten Signale in der Folge zu einem gemeinsamen Combiner 38 geführt. In diesem werden alle beteiligten Messkanäle 20, 22, 24... addiert, wobei es sich nicht um eine einfache Addition handelt, wie sie beispielsweise bei den aus der Hochfrequenztechnik bekannten Combinern, sondern diese Addition erfolgt frequenzselektiv. Dabei werden nur diejenigen Frequenzbereiche, in denen sich das vom jeweiligen TIA 32, 34, 36 kommende Messsignal befindet, ausgeschnitten und addiert. Aus diesem Grund wird auch das eingangs geschilderte Messrauschen der Einzelkanäle nicht überlagert und dementsprechend das SNR des Gesamtsignals nicht verschlechtert.

Ein weiterer Vorteil gegenüber den eingangs beschriebenen bekannten Lösungen besteht darin, dass die vielen, bei herkömmlichen Messkanälen erforderlichen Bandpass-Filter entfallen. Die in dem frequenzselektiven adaptiven Combiner 38 addierten Messsignale 40 werden dann in einem gemeinsamen Verstärker 42 verstärkt und schließlich über einen gemeinsamen A/D-Wandler 44 in digitale elektrische Signale umgewandelt, die den erfassten radiometrischen/spektralen Daten entsprechen.

Diese Signale werden dann von einem für alle Messkanäle 20, 22, 24 gemeinsamen Auswerteprozessor 46 in an sich bekannter Weise verarbeitet.

Wie vorstehend erwähnt, ist der Combiner 38 auch Variationen durch thermische Drift und Bauteiltoleranzen ausgesetzt. Zur Kompensation derartiger Messfehler kann die erfindungsgemäße Signalverarbeitung dahingehend verbessert werden, dass jedem Messkanal 20, 22, 24... ein Bauteil mit veränderlicher Kapazität, beispielsweise eine Variocap-Diode, zugeordnet ist, durch die derartige Effekte kompensiert werden können. Durch eine zusätzliche Auswertung der einzelnen Phasenlagen der Messfrequenzen im Auswerteprozessor 46 lassen sich dann diese Driften/Toleranzen des Combiners 38 rechnerisch bestimmen und entweder in Rückführung 48 durch Ansteuerung der jeweiligen Variocap-Diode (siehe den Pfeil in Figur 2) im Combiner 38 oder auch nur rechnerisch im Auswerteprozessor 46 korrigieren. Letzteres erfolgt allerdings vorzugsweise nur dann, wenn diese Abweichungen nicht zu groß sind. Natürlich lässt sich die Auswertung der Phasenlagen der Messfrequenzen auch zur Berechnung der Objektdistanz verwenden, so dass unter Umständen der separate IR Kanal zur Distanzmessung entfallen kann.

Durch das erfindungsgemäße Konzept, mehrere Messkanäle 20, 22, 24 .... zumindest abschnittsweise über einen Combiner 38 zu einem Signalpfad 50 zu addieren, kann die Messgenauigkeit gegenüber herkömmlichen Lösungen ganz erheblich verbessert werden und zudem noch der schaltungstechnische Aufwand verringert werden.

Offenbart ist ein multispektraler Laserscanner zur räumlichen und radiometrischen Erfassung von Daten.

### Bezugszeichen liste

- 1: Laserscanner
- 2: Modulatoreinheit
- 4: koaxiales Bündel Laserstrahlen
- 6: Drehspiegel
- 8: Rotationsachse
- 10: Vertikalachse
- 12: Bohrung
- 14: Spiegel
- 16: Optik
- 18: Bandpass-Filter
- 20: Messkanal
- 22: Messkanal
- 24: Messkanal
- 26: APD
- 28: APD
- 30: APD
- 32: TIA
- 34: TIA
- 36: TIA
- 38: Combiner
- 40: addierte Messsignale
- 42: Verstärker
- 44: A/D-Wandler
- 46: Auswerteprozessor
- 48: Rückführung
- 50: Signalpfad

- IR: Laserdiode (Distanzmesser)
- λ_{1..N}: Laserdioden (radiometrische Erfassung)
- S_{1..N}: Dichroitische Spiegel

## Patentansprüche

1. Laserscanner mit einem Sensor zum Erfassen von räumlichen Daten und, zusätzlich mehreren multispektralen Sensoren, zur Erfassung von radiometrischen Daten, wobei jeder Sensor eine Laserdiode hat, deren Laserstrahl über ein 3D-Strahlablenksystem auf ein zu vermessendes Objekt gerichtet wird, wobei von diesem reflektierte Strahlen über optische Elemente in einzelne Wellenlängen aufgeteilt und über optoelektronische Messkanäle mit Photodioden und einer zugeordnete Auswerteeinheit verarbeitet werden, **gekennzeichnet durch** einen Combiner (38), über den zumindest einige der Messkanäle (20, 22, 24) selektiv zu einem Signalpfad (50) addiert sind, wobei diesem ein gemeinsamer Auswerteprozessor (46) zugeordnet ist, wobei der Auswerteprozessor (46) ausgelegt ist, um Phasenlagen der einzelnen radiometrischen Messfrequenzen zu ermitteln und daraus Driften/Toleranzen im Combiner (28) zu bestimmen und zu korrigieren.

2. Laserscanner nach Patentanspruch 1, wobei der Combiner (38) ausgelegt ist, um die Messkanäle (20, 22, 24) frequenzselektiv zu addieren.

3. Laserscanner nach einem der Patentansprüche 1 oder 2, wobei die vom Auswerteprozessor (46) ermittelten Phasenlagen auch zur Bestimmung der Objektdistanz verwendet werden

4. Laserscanner nach einem der Patentansprüche 1 bis 3, wobei zumindest einigen Messkanälen (20, 22, 24) Bauteile mit veränderlicher Kapazität, vorzugsweise Variocap-Dioden, zugeordnet sind, die zur Kompensation von Driften/Toleranzen über den Auswerteprozessor (46) ansteuerbar sind.

5. Laserscanner nach einem der vorhergehenden Patentansprüche, wobei der gemeinsame Signalpfad (50) aller radiometrischen Kanäle und optional auch des Kanals zur 3D-Vermessung (Distanz) nur einen Verstärker (42) und einen A/D-Wandler (44) aufweist.

6. Laserscanner nach einem der vorhergehenden Patentansprüche, mit einem gemeinsamen optischen Strahlengang aller Laserdioden zur 3D-Vermessung und zur radiometrischen Vermessung.

7. Laserscanner nach einem der vorhergehenden Patentansprüche, wobei dieser derart angesteuert ist, dass jeweils identische Flächen im Objektraum sowohl 3D- als auch radiometrisch vermessen sind.

8. Laserscanner nach einem der vorhergehenden Patentansprüche mit zumindest einer Laserdiode zur 3D-Vermessung und zumindest drei weiteren Spektralkanälen mit Laserdioden zur radiometrischen Vermessung.

9. Laserscanner nach einem der vorhergehenden Patentansprüche, wobei die Unterscheidung der einzelnen Spektralkanäle im Empfangszweig auch durch deren unterschiedliche Modulations-Frequenzen erfolgt.

10. Laserscanner nach Patentanspruch 1 oder 2, wobei der Laserscanner dazu eingerichtet ist, eine Modulation / synchrone Demodulation im Sende-/Empfangszweig der Spektralkanäle zu verwenden, um für eine hohe Empfindlichkeit, sowie eine Unterdrückung der Umgebungsbeleuchtung zu sorgen.

## Claims

1. Laser scanner having a sensor for acquiring spatial data and, in addition, a plurality of multispectral sensors for acquiring radiometric data, wherein each sensor has a laser diode whose laser beam is directed via a 3D beam deflection system onto an object to be measured, wherein beams reflected by the latter are divided into individual wavelengths via optical elements and processed via optoelectronic measuring channels with photodiodes and an associated evaluation unit, **characterized by** a combiner (38) via which at least some of the measuring channels (20, 22, 24) are selectively added to a signal path (50), wherein a common evaluation processor (46) is associated therewith, wherein the evaluation processor (46) is configured to determine phasing of the individual radiometric measurement frequencies and to determine and correct drifts/tolerances in the combiner (28) therefrom.

2. Laser scanner according to patent claim 1, wherein the combiner (38) is configured to add the measuring channels (20, 22, 24) in a frequency-selective manner.

3. Laser scanner according to one of patent claims 1 or 2, wherein the phasing positions determined by the evaluation processor (46) are also used for determining the object distance.

4. Laser scanner according to one of patent claims 1 to 3, wherein at least some measuring channels (20, 22, 24) have associated components with variable capacitance, preferably variocap diodes, which can be controlled via the evaluation processor (46) for compensating drifts/tolerances.

5. Laser scanner according to one of the preceding patent claims, wherein the common signal path (50) of all radiometric channels and optionally also of the channel for 3D measurement (distance) comprises only one amplifier (42) and one A/D converter (44).

6. Laser scanner according to one of the preceding patent claims, with a common optical beam path of all laser diodes for 3D measurement and radiometric measurement.

7. Laser scanner according to one of the preceding patent claims, wherein the latter is controlled in such a way that identical surfaces in the object space are measured both in 3D and radiometrically.

8. Laser scanner according to one of the preceding patent claims with at least one laser diode for 3D measurement and at least three further spectral channels with laser diodes for radiometric measurement.

9. Laser scanner according to one of the preceding patent claims, wherein the distinction of the individual spectral channels in the receive path is also effected by their different modulation frequencies.

10. Laser scanner according to patent claim 1 or 2, wherein the laser scanner is configured to use modulation/synchronous demodulation in the transmit/receive path of the spectral channels to provide high sensitivity and to suppress ambient lighting.

## Revendications

1. Scanner laser avec un capteur pour la détection de données spatiales et, en plus, plusieurs capteurs multispectraux pour la détection de données radiométriques, dans lequel chaque capteur a une diode laser dont le rayon laser est dirigé par l'intermédiaire d'un système de déviation de rayon 3D sur un objet à mesurer, dans lequel des rayons réfléchis par celui-ci sont divisés par l'intermédiaire d'éléments optiques en des longueurs d'ondes individuelles et sont traités par l'intermédiaire de canaux de mesure optoélectroniques avec des photodiodes et une unité d'évaluation associée,
**caractérisé par** un combineur (38) par l'intermédiaire duquel au moins certains des canaux de mesure (20, 22, 24) sont additionnés sélectivement en un trajet de signal (50),
dans lequel un processeur d'évaluation (46) commun est associé à ce trajet de signal,
dans lequel le processeur d'évaluation (46) est conçu pour déterminer des relations de phase des fréquences de mesure radiométriques individuelles et pour déterminer et corriger à partir de là des dérives/tolérances dans le combineur (28).

2. Scanner laser selon la revendication 1, dans lequel le combineur (38) est conçu pour additionner les canaux de mesure (20, 22, 24) de manière sélective par rapport aux fréquences.

3. Scanner laser selon l'une quelconque des revendications 1 ou 2, dans lequel les relations de phase déterminées par le processeur d'évaluation (46) sont aussi utilisées pour la détermination de la distance d'objet.

4. Scanner laser selon l'une quelconque des revendications 1 à 3, dans lequel des composants ayant une capacité variable, de préférence des diodes de type varicap, qui peuvent être commandés pour compenser des dérives/tolérances par l'intermédiaire du processeur d'évaluation (46) sont associés à au moins certains canaux de mesure (20, 22, 24).

5. Scanner laser selon l'une quelconque des revendications précédentes, dans lequel le trajet de signal (50) commun de tous les canaux radiométriques et aussi optionnellement du canal de la mesure 3D (distance) comporte seulement un amplificateur (42) et un convertisseur A/D (44).

6. Scanner laser selon l'une quelconque des revendications précédentes, avec un trajet de rayon optique commun de toutes les diodes lasers pour la mesure 3D et pour la mesure radiométrique.

7. Scanner laser selon l'une quelconque des revendications précédentes, dans lequel celui-ci est commandé de telle sorte que, à chaque fois, des surfaces identiques dans l'espace d'objet sont mesurées aussi bien d'un point de vue 3D que d'un point de vue radiométrique.

8. Scanner laser selon l'une quelconque des revendications précédentes, avec au moins une diode laser pour la mesure 3D et au moins trois autres canaux spectraux avec des diodes lasers pour la mesure radiométrique.

9. Scanner laser selon l'une quelconque des revendications précédentes, dans lequel la distinction des canaux spectraux individuels dans la branche de réception s'effectue aussi grâce à leurs fréquences de modulation différentes.

10. Scanner laser selon la revendication 1 ou 2, dans lequel le scanner laser est installé pour utiliser une modulation / démodulation synchrone dans la branche d'émission/réception des canaux spectraux afin d'assurer une sensibilité élevée ainsi qu'une suppression de l'éclairage ambiant.
